# EUROPEAN PATENT APPLICATION

(11) **EP 2 947 922 A1**
(43) Date of publication of application: **25.11.2015**
(21) Application number: 14740509.6
(22) Date of filing: 17.01.2014
(51) Int. Cl.: H04W 48/16

(54) **MOBILE COMMUNICATION TERMINAL AND WIRELESS ACCESS NETWORK DEVICE**

(30) Priority: 17.01.2013 JP 2013006223; 18.03.2013 JP 2013054697
(71) Applicant: NTT DOCOMO, INC., Chiyoda-ku Tokyo 100-6150 (JP)
(72) Inventor: MOON, Sung Uk, Tokyo 100-6150 (JP); UEKI, Atsushi, Tokyo 100-6150 (JP); FUJIMURA, Kota, Tokyo 100-6150 (JP); TANIKAWA, Hiroaki, Tokyo 100-6150 (JP)
(74) Representative: Hoffmann Eitle
(86) International application number: PCT/JP2014/050771
(87) International publication number: WO 2014/112578

(57) **Abstract**

The present invention shortens an out-of-service duration while suppressing an increase of power consumption. A mobile communication terminal UE of the present invention includes a control unit 11 configured to, when the mobile communication terminal UE fails, consecutively a predetermined number of times, to transmit a "RRC Connection Request" for a camping-on cell #A, add the cell #A to a rejection cell list and perform cell search. In the cell search, the control unit 11 excludes the cell #A included in the rejection cell list from cells of selection targets.

## Description

### TECHNICAL FIELD

The present invention relates to a mobile communication terminal and a radio access network device.

### BACKGROUND ART

In the specifications of 3GPP, a procedure of establishing RRC connection is specified. This procedure is a necessary procedure for establishing connection when a mobile communication terminal starts communication with a network.

In UTRAN (Universal Terrestrial Radio Access Network), when a mobile communication terminal UE starts communication while camping on a certain cell, the mobile communication terminal UE is configured to transmit a "RRC Connection Request" to a radio access network device RAN and request establishment of RRC connection.

In this case, the mobile communication terminal UE increments a variable V300 by one when transmitting the "RRC Connection Request".

Note that the mobile communication terminal UE manages a timer T300 in consideration of a case where the transmission of the "RRC Connection Request" fails.

When the timer T300 expires, the mobile communication terminal UE compares V300 and N300 notified by the radio access network device RAN with each other, and terminates the procedure when V300 > N300 is satisfied.

Meanwhile, a similar specification is specified also in E-UTRAN. The mobile communication terminal UE terminates the procedure upon expiration of the timer T300 for a case where the radio access network device RAN transmits no response to the "RRC Connection Request".

The procedure in E-UTRAN is different from the procedure in UTRAN in that comparison between V300 and N300 is not performed in the procedure in E-UTRAN.

In the aforementioned procedures, the timer T300 and N300 are notified by the radio access network device as broadcast information.

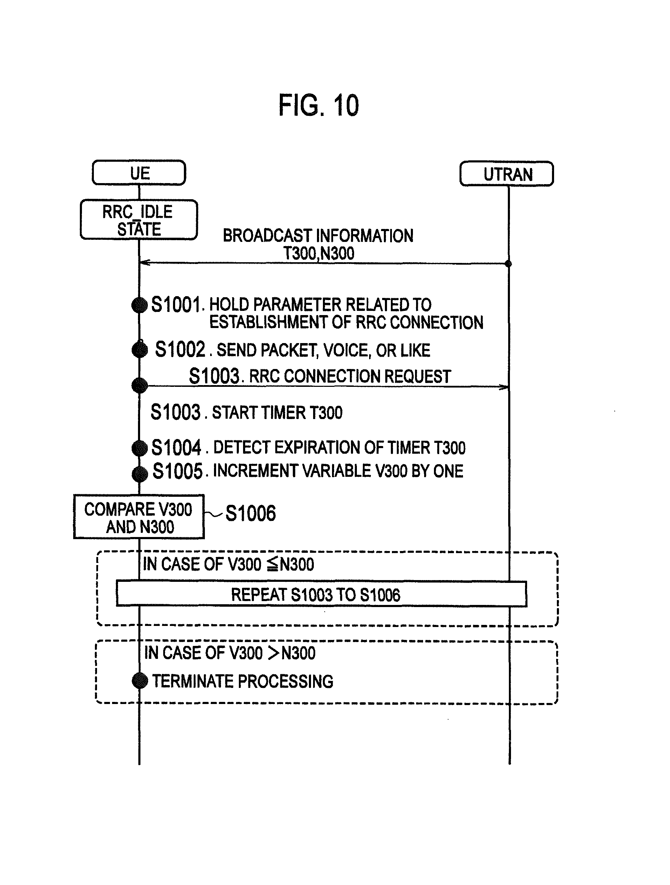

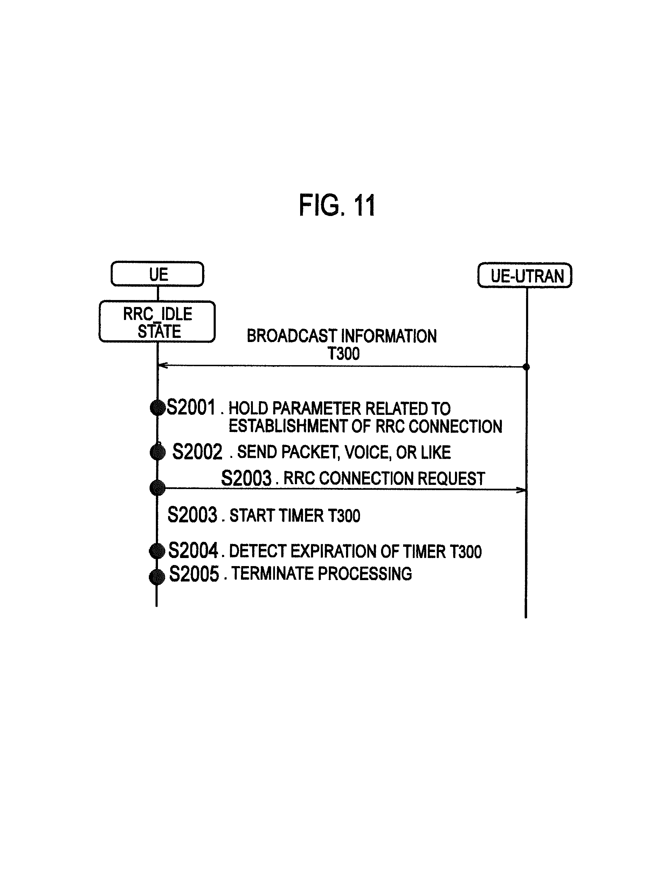

Fig. 10 shows a sequence in a case where there is no response from the radio access network device in the procedure of establishing the RRC connection in UTRAN, and Fig. 11 shows a sequence in a case where there is no response from the radio access network device in the procedure of establishing the RRC connection in E-UTARN.

First, referring to Fig. 10, description is given of the sequence in the case where there is no response from the radio access network device in the procedure of establishing the RRC connection in UTRAN.

As shown in Fig. 10, in step S1001, the mobile communication terminal UE in a RRC_IDLE state receives the timer T300 and the retransmission number N300, which are used to manage retransmission of the "RRC Connection Request", by way of the broadcast information from a radio access network UTRAN managing the camping-on cell, and holds the timer T300 and the retransmission number N300.

In step S1002, the mobile communication terminal UE attempts to start packet communication, voice communication, or the like from a state where no RRC connection is established.

In step S1003, the mobile communication terminal UE transmits the "RRC Connection Request" to the radio access network UTRAN and starts the timer T300.

When the timer T300 expires in step S1004, the mobile communication terminal UE increments V300 by one in step S1005 and compares V300 and N300 with each other in step S1006.

When V300 is equal to or smaller than N300, the mobile communication terminal UE retransmits the "RRC Connection Request" to the radio access network UTRAN and repeats the procedure of steps S1003 to S1006.

Meanwhile, when V300 is greater than N300, the mobile communication terminal UE judges that the procedure of establishing the RRC connection has failed, and terminates the processing.

Thereafter, the mobile communication terminal UE repeats the procedure of step S1002 and the subsequent steps again if the start of packet communication, voice communication, or the like is necessary.

Secondly, referring to Fig. 11, description is given of the sequence in the case where there is no reply from the radio access network device in the procedure of establishing the RRC connection in E-UTRAN.

As shown in Fig. 11, in step S2001, the mobile communication terminal UE in the RRC_IDLE state receives the timer T300, which is used to manage retransmission of the "RRC Connection Request", by way of the broadcast information from a radio access network E-UTRAN managing the camping-on cell, and holds the timer T300.

In step S2002, the mobile communication terminal UE attempts to start packet communication, voice communication, or the like from a state where no RRC connection is established.

In step S2003, the mobile communication terminal UE transmits the "RRC Connection Request" to the radio access network E-UTRAN and starts the timer T300.

When the timer T300 expires in step S2004, the mobile communication terminal UE judges that the procedure of establishing the RRC connection has failed, and terminates the processing in step S2005.

Thereafter, the mobile communication terminal UE repeats the procedure of step S2002 and the subsequent steps again if the start of packet communication, voice communication, or the like is necessary.

### PRIOR ART DOCUMENT

### PATENT DOCUMENT

PATENT DOCUMENT 1: Japanese Patent Application Publication No. 6-104831
PATENT DOCUMENT 2: Japanese Patent Application Publication No. 2009-296535
PATENT DOCUMENT 3: Japanese Patent Application Publication No. 2012-049877

### SUMMARY OF THE INVENTION

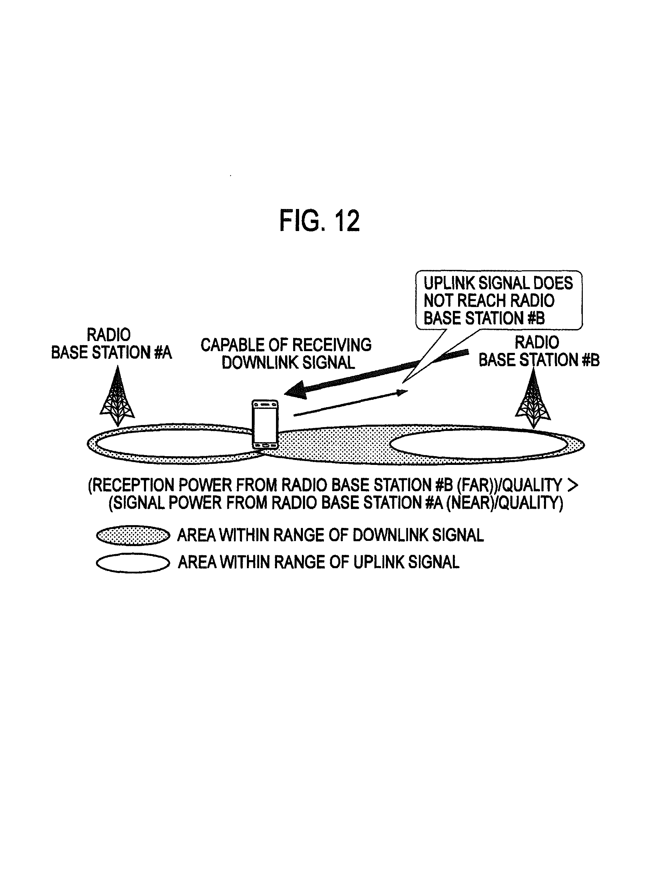

For example, there is a case where the mobile communication terminal UE cannot receive the response to the "RRC Connection Request" from the radio access network due to the following reasons or the like : as shown in Fig. 12, the mobile communication terminal UE camps on a cell in which reception power of a downlink signal is sufficient but an uplink signal cannot reach a radio base station for some reason; or the radio access network cannot send back a response due to congestion.

The following case is conceivable as a specific example. When the mobile communication terminal UE stays in a waterfront area and a radio wave from a radio base station #A at a physically-close distance is not strong but a reception power of a downlink signal from a radio base station #B on the opposite waterfront area is strong, the mobile communication terminal UE camps on a cell under the radio base station #B.

In such a case, the mobile communication terminal UE sometimes cannot obtain the response from the radio access network even if the mobile communication terminal UE transmits the "RRC Connection Request" for the same cell again and again.

In this case, there occurs a problem that a situation where a user cannot receive a service continues.

Moreover, since the mobile communication terminal UE continues unnecessary transmission of the "RRC Connection Request", the mobile communication terminal UE also has a problem of an increase of power consumption.

The present invention has been made in view of the problems described above, and an objective is to provide a mobile communication terminal and a radio access network device which can shorten an out-of-service duration while suppressing an increase of power consumption.

A first feature of the present invention is summarized as a mobile communication terminal including a control unit configured to, when the mobile communication terminal fails, consecutively a predetermined number of times, to transmit a connection establishment request signal for a camping-on cell, add the cell to a rejection cell list and perform cell search. Here, in the cell search, the control unit excludes the cell included in the rejection cell list from cells of selection targets.

A second feature of the present invention is summarized as a radio access network device including a transmission unit configured to transmit a control signal to a mobile communication terminal. Here, when the mobile communication terminal fails, consecutively a predetermined number of times, to transmit a connection establishment request signal for a camping-on cell, the control signal instructs the mobile communication terminal whether or not to add the cell to the rejection cell list and perform cell search.

### BRIEF DESCRIPTION OF THE DRAWINGS

[Fig. 1] Fig. 1 is an overall configuration diagram of a mobile communication system in a first embodiment of the present invention.
[Fig. 2] Fig. 2 is a functional block diagram of a mobile communication terminal in the first embodiment of the present invention.
[Fig. 3] Fig. 3 is a flowchart showing an operation of the mobile communication terminal in the first embodiment of the present invention.
[Fig. 4] Fig. 4 is a flowchart showing an operation of the mobile communication terminal in the first embodiment of the present invention.
[Fig. 5] Fig. 5 is a flowchart showing an operation of the mobile communication terminal in the first embodiment of the present invention.
[Fig. 6] Fig. 6 is a flowchart showing an operation of the mobile communication terminal in the first embodiment of the present invention.
[Fig. 7] Fig. 7 is a functional block diagram of a radio access network device in a modified example 1 of the present invention.
[Fig. 8] Fig. 8 is a view showing an example of a control signal transmitted by the radio access network device in the modified example 1 of the present invention.
[Fig. 9] Fig. 9 is a sequence diagram showing an operation of a mobile communication system in the modified example 1 of the present invention.
[Fig. 10] Fig. 10 is a view for explaining a conventional art.
[Fig. 11] Fig. 11 is a view for explaining a conventional art.
[Fig. 12] Fig. 12 is a view for explaining a conventional art.

### MODE FOR CARRYING OUT THE INVENTION

### (Mobile Communication System in First Embodiment of Present Invention)

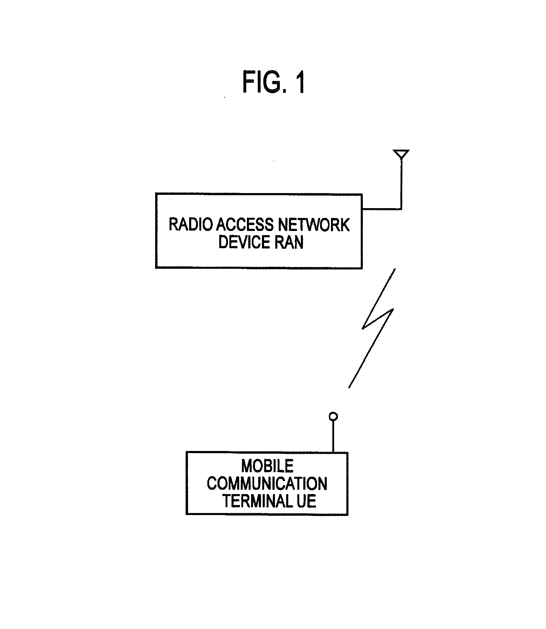

A mobile communication system in a first embodiment of the present invention is described with reference to Figs. 1 to 6. The embodiment is described with WCDMA and LTE mobile communication systems being given as examples of the mobile communication system of the embodiment. However, the present invention can be applied also to mobile communication systems other than the WCDMA and LTE mobile communication systems.

As shown in Fig. 1, the mobile communication system of the embodiment includes a radio access network device RAN and a mobile communication terminal UE.

The radio access network device RAN in the WCDMA system is a radio network control unit RNC, and the radio access network device RAN in the LTE system is a radio base station eNB.

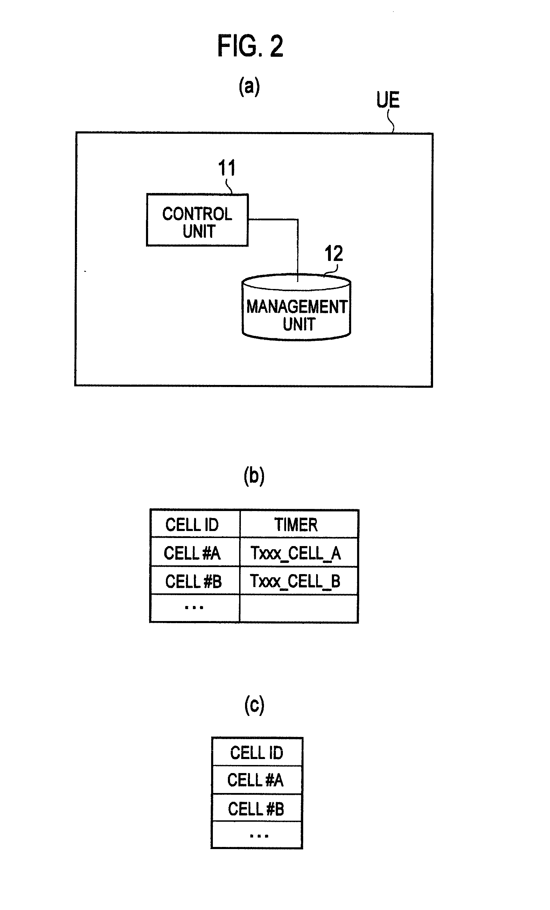

As shown in part (a) of Fig. 2, the mobile communication terminal UE in the embodiment includes a control unit 11 and a management unit 12.

The control unit 11 is configured to perform processing for various controls, for example, the whole communication control in the mobile communication terminal UE.

The management unit 12 is configured to manage a rejection cell list to be described later, timers Txx1 to Txx3, and the like.

Part (b) of Fig. 2 shows an example of the rejection cell list used when rejection time management methods #A to #C to be described later are applied, and Part (c) of Fig. 2 shows an example of the rejection cell list used when a rejection time management method #D to be described later is applied.

The control unit 11 is configured as follows. When the mobile communication terminal UE fails consecutively N-times to transmit a "RRC Connection Request" for a camping-on cell #A, the control unit 11 adds the cell #A to the rejection cell list and performs cell search.

For example, "N = N300×M" is satisfied in UTRAN, and "N = M" is satisfied in E-URAN. Note that "M" may be a value uniquely held by the mobile communication terminal UE or a parameter broadcasted by the radio access network device RAN.

Moreover, the control unit 11 is configured to exclude the cell #A included in the rejection cell list from cells of selection targets when performing a cell search.

The control unit 11 is configured to delete the cell #A from the rejection list after a certain period elapses from the addition of the cell #A to the rejection cell list.

For example, in a case where the rejection time management method #A is applied, the control unit 11 is configured to start the internal timer Txx1 included in the mobile communication terminal UE when the cell #A is added to the rejection cell list, and to delete the cell #A from the rejection cell list (see part (b) of Fig. 2) when the internal timer Txx1 expires.

In a case where the rejection time management method #B is applied, the control unit 11 is configured to start the timer Txx2 when the cell #A is added to the rejection cell list and to delete the cell #A from the rejection cell list (see Part (b) of Fig. 2) when the timer Txx2 expires, the timer Txx2 calculated by using T300/N300 broadcasted by the radio access network device RAN.

In this case, the control unit 11 may be configured to calculate the timer Txx2 based on "T300×N300×L" in the UTRAN. Note that "L" may be a value uniquely held by the mobile communication terminal UE or a parameter broadcasted by the radio access network device RAN.

In a case where the rejection time management method #C is applied, the control unit 11 is configured to start the timer Txx3 broadcasted by the radio access network device RAN when the cell #A is added to the rejection cell list, and to delete the cell #A from the rejection cell list (see part (b) of Fig. 2) when the timer Txx3 expires.

In a case where the rejection time management method #D is applied, the control unit 11 is configured to delete all of the cells in the rejection cell list (see part (c) of Fig. 2) when the mobile communication terminal UE succeeds in starting communication with a cell not included in the rejection cell list.

Each of the rejection time management methods #A to #C maybe applied in combination with the rejection time management method #D.

Moreover, in the cases where the rejection time management methods #A to #C are applied, as shown in Part (b) of Fig. 2, the management unit 12 is configured to manage the timers Txx1 to Txx3 (timers Txxx) independently from one another for respective cells.

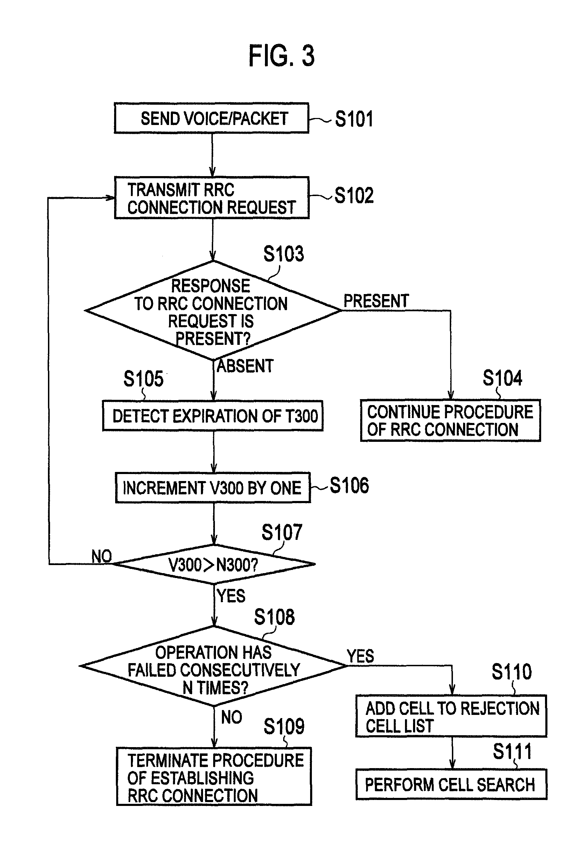

Operations of the mobile communication system in the embodiment, specifically operations of the mobile communication terminal UE in the embodiment are described below with reference to Figs. 3 to 6.

First, referring to Fig. 3, description is given of an operation performed from a point where the mobile communication terminal UE attempts to start voice communication or packet communication to a point where the mobile communication terminal UE adds a cell to the rejection cell list and executes the cell search.

As shown in Fig. 3, when the mobile communication terminal UE attempts to start the voice communication or the packet communication in step S101, the mobile communication terminal UE transmits the "RRC Connection Request" to the radio access network device RAN managing the camping-on cell, and starts the timer T300 in step 102.

When the mobile communication terminal UE receives a response to the "RRC Connection Request" from the radio access network device RAN in step S103, the mobile communication terminal UE continues the procedure of establishing the RRC connection in step S104.

Meanwhile, when the mobile communication terminal UE receives no response to the "RRC Connection Request" from the radio access network device RAN in step S103 and detects expiration of the timer T300 in step S105, the mobile communication terminal UE increments V300 by one in step S106 and compares V300 and N300 with each other.

When the mobile communication terminal UE determines that V300 is greater than N300, this operation proceeds to step S108. Meanwhile, when the mobile communication terminal UE does not determine that V300 is greater than N300, this operation returns to step S102.

When the mobile communication terminal UE determines in step S108 that the operation of steps S102 to S107 has not failed consecutively M times, the mobile communication terminal UE judges in step S109 that the procedure of establishing the RRC connection has failed.

Meanwhile, when the mobile communication terminal UE determines in step S108 that the operation of steps S102 to S107 has failed consecutively M times, the mobile communication terminal UE adds the aforementioned camping-on cell to the rejection cell list in step S110 and executes the cell search in step S111.

When such an operation is performed in the E-UTRAN, step S106 and step S107 are omitted.

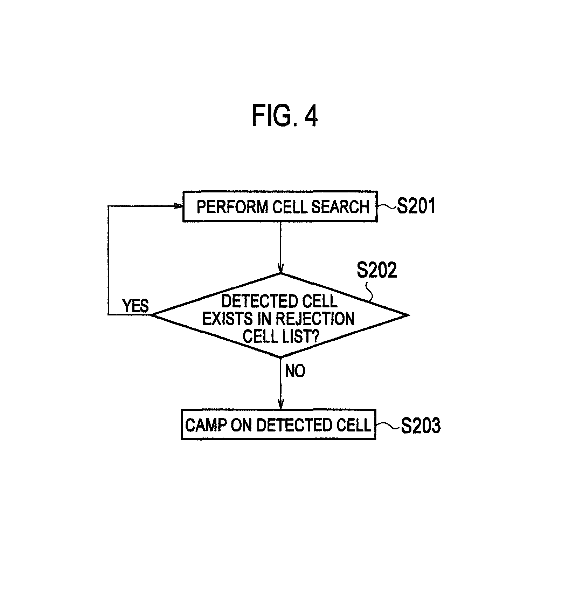

Secondly, referring to Fig. 4, description is given of an operation performed when the mobile communication terminal UE executes the cell search.

As shown in Fig. 4, when the mobile communication terminal UE starts the cell search in step S201, the mobile communication terminal UE determines whether the cell detected in the cell search is included in the rejection cell list in step S202.

When the mobile communication terminal UE determines that the cell detected in the cell search is included in the rejection cell list, the mobile communication terminal UE performs the cell search again in step S201.

Meanwhile, when mobile communication terminal UE determines that the cell detected in the cell search is not included in the rejection cell list, the mobile communication terminal UE camps on the cell in step S203.

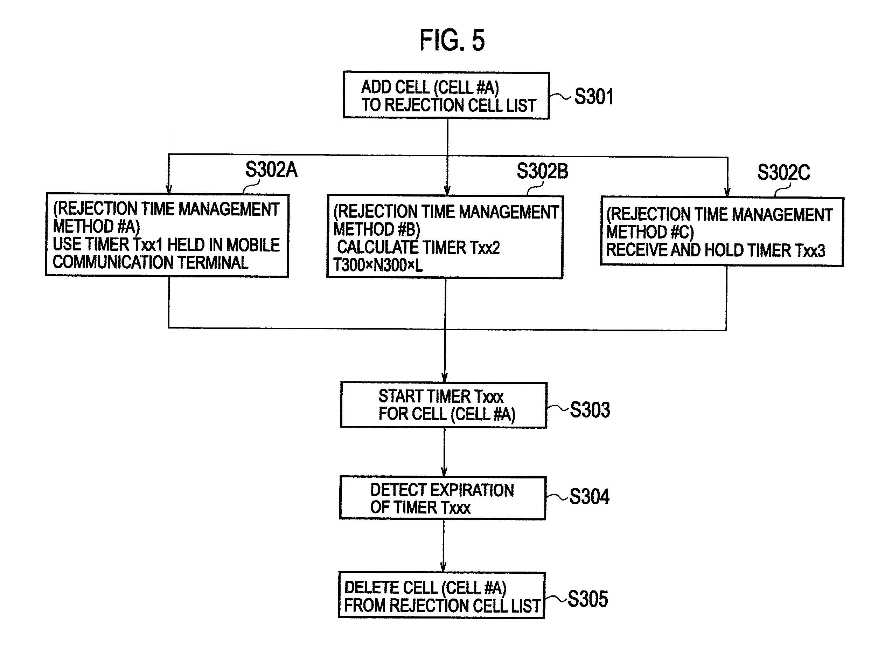

Thirdly, referring to Fig. 5, description is given of an operation performed when the mobile communication terminal UE manages the rejection cell list in the cases where the rejection time management methods #A to #C are applied.

As shown in Fig. 5, when the mobile communication terminal UE adds the cell #A to the rejection cell list in step S301, the mobile communication terminal UE acquires the timers Txx1 to Txx3 used in the rejection time management methods #A to #C in steps S302A to S302C, and starts the timers Txx1 to Txx3 in step 303.

When the mobile communication terminal UE detects the expiration of the timers Txx1 to Txx3 in step S304, the mobile communication terminal UE deletes the cell #A from the rejection cell list in step S305.

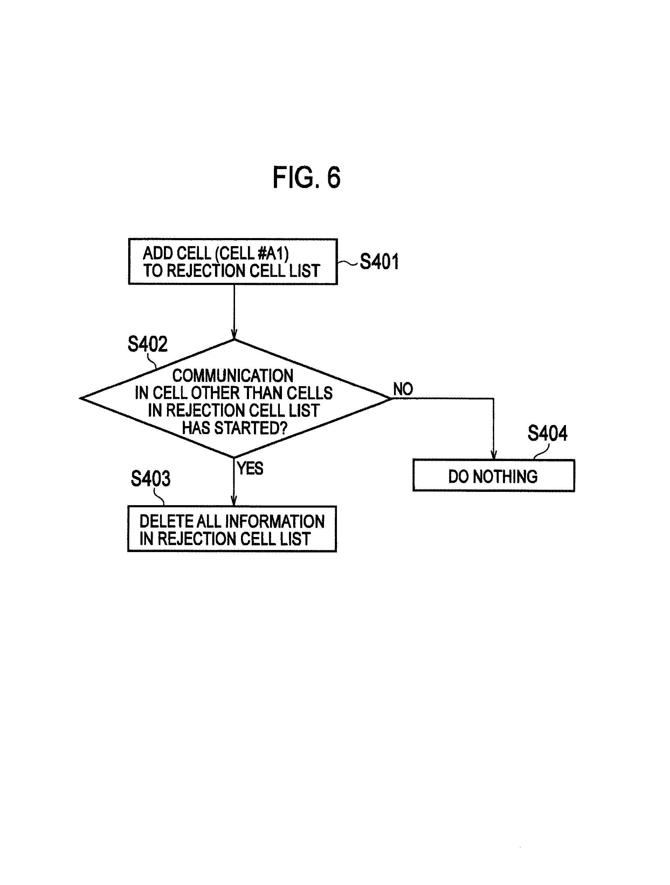

Fourthly, referring to Fig. 6, description is given of an operation performed when the mobile communication terminal UE manages the rejection cell list in the case where the rejection time management method #D is applied.

As shown in Fig. 6, when the mobile communication terminal UE adds the cell #A to the rejection cell list in step S401, the mobile communication terminal UE performs monitoring to detect success of communication start in a cell not included in the rejection cell list in step S402.

When the mobile communication terminal UE detects the success of communication start in a cell not included in the rejection cell list, the mobile communication terminal UE deletes the cell #A from the rejection cell list in step S403.

When a plurality of cells are registered in the rejection cell list in this case, the mobile communication terminal UE may delete all of the registered cells.

Meanwhile, when the mobile communication terminal UE detects no success of communication start in a cell not included in the rejection cell list, nothing is performed in step S404.

In the mobile communication system of the embodiment, the mobile communication terminal UE can start communication in a cell other than the camping-on cell, even when the "RRC Connection Request" does not reach the radio access network device RAN consecutively N times for some reason or even when the response to the "RRC Connection Request" from the radio access network device RAN is not received for some reason.

Moreover, in the mobile communication system of the embodiment, the mobile communication terminal UE does not transmit the "RRC Connection Request" more than necessary in the camping-on cell, and the power consumption of the mobile communication terminal UE can be reduced.

### (Modified Example 1)

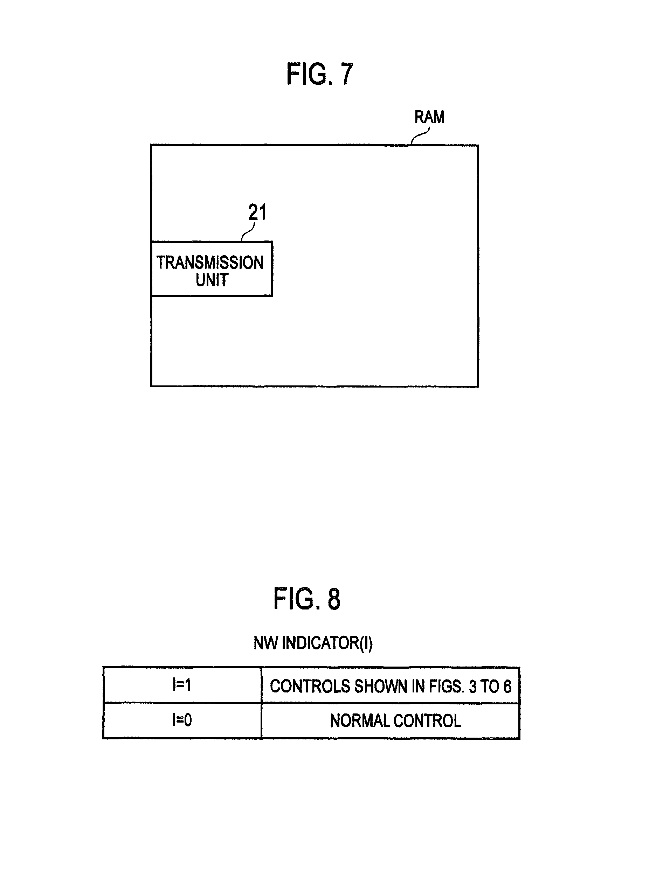

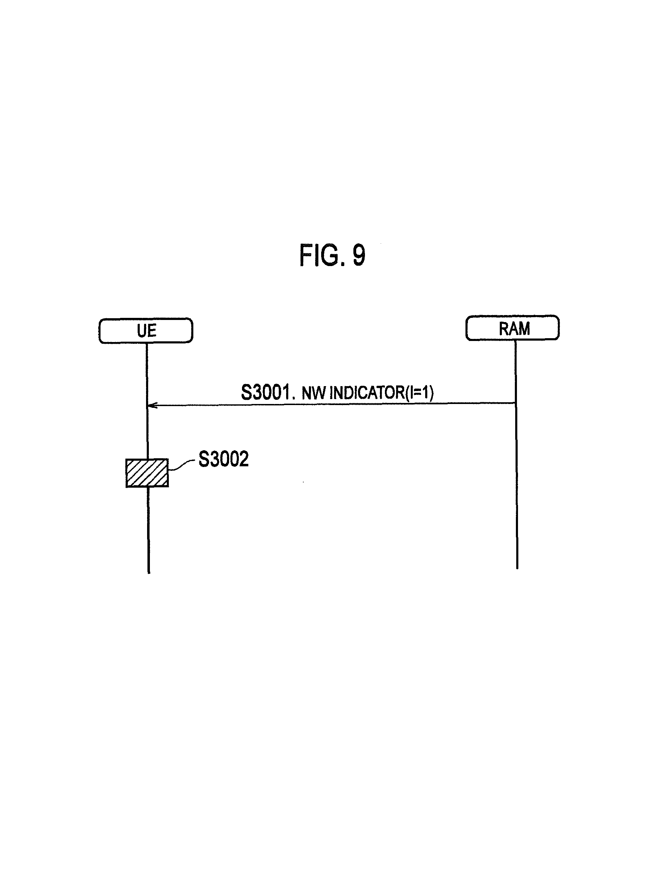

A mobile communication system in a modified example 1 of the present invention is described below with reference to Figs. 7 and 9, with focus on differences from the aforementioned mobile communication system in the first embodiment.

As shown in Fig. 7, the radio access network device RAN in the modified example 1 includes a transmission unit 21.

The transmission unit 21 is configured to transmit various signals to the mobile communication terminal UE. Specifically, the transmission unit 21 is configured to transmit "NW Indicator (I)" to the mobile communication terminal UE. The transmission unit 21 may be configured to broadcast the "NW Indicator (I)" in the cell under the radio access network device RAN.

The "NW Indicator (**I**)" described above is configured as follows. When the mobile communication terminal UE fails consecutively N times to transmit the "RRC Connection Request" for the camping-on cell #A, the "NW Indicator (I)" instructs the mobile communication terminal UE whether or not to add the cell #A to the rejection cell list and perform the cell search.

For example, as shown in Fig. 8, when "1" is set, the "NW Indicator (I)" instructs the mobile communication terminal UE to perform one of the controls shown in Figs. 3 to 6. Meanwhile, when "0" is set, the "NW Indicator (I)" instructs the mobile communication terminal UE to perform a normal control (normal RRC connection establishment procedure).

Specifically, the control unit 11 of the mobile communication terminal UE may be configured to determine whether to perform the aforementioned cell search depending on the "NW Indicator (I)" transmitted by the radio access network device RAN.

For example, the control unit 11 of the mobile communication terminal UE may be configured to perform the control shown in Fig. 3 when "1" is set in the "NW Indicator (I)" transmitted by the radio access network device RAN.

As an alternative, the control unit 11 of the mobile communication terminal UE may be configured to perform the control shown in Fig. 4 when "1" is set in the "NW Indicator (I)" transmitted by the radio access network device RAN.

As another alternative, the control unit 11 of the mobile communication terminal UE may be configured to perform the control shown in Fig. 5 when "1" is set in the "NW Indicator (I) transmitted by the radio access network device RAN.

As yet another alternative, the control unit 11 of the mobile communication terminal UE may be configured to perform the control shown in Fig. 6 when "1" is set in the "NW Indicator (I)" transmitted by the radio access network device RAN.

Meanwhile, the control unit 11 of the mobile communication terminal UE may be configured to perform the normal control (normal RRC connection establishment procedure) without performing the controls shown in Figs. 3 to 6 when "0" is set in the "NW Indicator (I)" transmitted by the radio access network device RAN.

Operations of the mobile communication system in the modified example 1 are described below with reference to Fig. 9.

As shown in Fig. 9, in step S3001, the radio access network device RAN transmits the "NW Indicator (I)" to the mobile communication terminal UE.

In step S3002, the mobile communication terminal UE performs one of the controls shown Figs. 3 to 6 when "1" is set in the "NW Indicator (I)".

In step S3002, the mobile communication terminal UE performs the normal control (normal RRC connection establishment procedure) without performing the controls shown in Figs. 3 to 6 when "0" is set in the "NW Indicator (I)".

The features of the present embodiment may also be expressed as follows.

A first feature of the present embodiment is summarized as a mobile communication terminal UE including a control unit 11 configured to, when the mobile communication terminal UE fails, consecutively N-times (predetermined number of times), to transmit a "RRC Connection Request (connection establishment request signal)" for a camping-on cell #A, add the cell #A to a rejection cell list and perform cell search. Here, in the cell search, the control unit 11 excludes the cell #A included in the rejection cell list from cells of selection targets.

In the first feature of the embodiment, the control unit 11 starts an internal timer Txx1 included in the mobile communication terminal UE when the cell #A is added to the rejection cell list, and deletes the cell #A from the rejection cell list when the internal timer Txx1 expires.

In the first feature of the embodiment, the control unit 11 starts a timer Txx2 calculated by using T300/N300 (parameter) broadcasted by a radio access network device RAN when the cell #A is added to the rejection cell list, and deletes the cell #A from the rejection cell list when the timer Txx2 expires.

In the first feature of the embodiment, the control unit 11 starts a timer Txx3 broadcasted by a radio access network device RAN when the cell #A is added to the rejection cell list, and deletes the cell #A from the rejection cell list when the timer Txx3 expires.

In the first feature of the embodiment, when the mobile communication terminal UE succeeds to start communication in a cell not included in the rejection cell list, the control unit 11 deletes all cells in the rejection cell list.

In the first feature of the embodiment, the control unit 11 determines whether or not to perform the cell search depending on "NW Indicator (control signal) " transmitted by the radio access network device RAN.

A second feature of the present embodiment is summarized as a radio access network device RAN including a transmission unit 21 configured to transmit "NW Indicator" to a mobile communication terminal UE. Here, when the mobile communication terminal UE fails, consecutively N-times, to transmit a "RRC Connection Request" for a camping-on cell #A, the "NW Indicator" instructs the mobile communication terminal UE whether or not to add the cell #A to the rejection cell list and perform cell search.

It should be noted that the foregoing operations of the radio access network device RAN and the mobile communication terminal UE may be implemented by hardware, may be implemented by a software module executed by a processor, or may be implemented in combination of the two.

The software module may be provided in a storage medium in any format, such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to a processor so that the processor can read and write information from and to the storage medium. Instead, the storage medium may be integrated in a processor. The storage medium and the processor may be provided inside an ASIC. Such an ASIC may be provided in the radio access network device RAN and the mobile communication terminal UE. Otherwise, the storage medium and the processor may be provided as discrete components inside the radio access network device RAN and the mobile communication terminal UE.

Hereinabove, the present invention has been described in detail by use of the foregoing embodiments. However, it is apparent to those skilled in the art that the present invention should not be limited to the embodiments described in the specification. The present invention can be implemented as an altered or modified embodiment without departing from the spirit and scope of the present invention, which are determined by the description of the scope of claims. Therefore, the description of the specification is intended for illustrative explanation only and does not impose any limited interpretation on the present invention.

Note that the entire contents of Japanese Patent Application No. 2013-006223 (filed on January 17, 2013) and Japanese Patent Application No. 2013-054697 (filed on March 18, 2013) are incorporated by reference in the present specification.

### INDUSTRIAL APPLICABILITY

As described above, the present invention can provide a mobile communication terminal and a radio access network device which can shorten an out-of-service duration while suppressing an increase of power consumption.

### EXPLANATION OF THE REFERENCE NUMERALS

- RAN: radio access network device
- UE: mobile communication terminal
- 11: control unit
- 12: management unit

## Claims

1. A mobile communication terminal comprising a control unit configured to, when the mobile communication terminal fails, consecutively a predetermined number of times, to transmit a connection establishment request signal for a camping-on cell, add the cell to a rejection cell list and perform cell search, wherein
in the cell search, the control unit excludes the cell included in the rejection cell list from cells of selection targets.

2. The mobile communication terminal according to claim 1, wherein the control unit starts an internal timer included in the mobile communication terminal when the cell is added to the rejection cell list, and deletes the cell from the rejection cell list when the internal timer expires.

3. The mobile communication terminal according to claim 1, wherein the control unit starts a timer calculated by using a parameter broadcasted by a radio access network device when the cell is added to the rejection cell list, and deletes the cell from the rejection cell list when the timer expires.

4. The mobile communication terminal according to claim 1, wherein the control unit starts a timer broadcasted by a radio access network device when the cell is added to the rejection cell list, and deletes the cell from the rejection cell list when the timer expires.

5. The mobile communication terminal according to any one of claims 1 to 4, wherein, when the mobile communication terminal succeeds to start communication in a cell not included in the rejection cell list, the control unit deletes all cells in the rejection cell list.

6. The mobile communication terminal according to any one of claims 1 to 5, wherein the control unit determines whether or not to perform the cell search depending on a control signal transmitted by the radio access network device.

7. A radio access network device comprising a transmission unit configured to transmit a control signal to a mobile communication terminal, wherein
when the mobile communication terminal fails, consecutively a predetermined number of times, to transmit a connection establishment request signal for a camping-on cell, the control signal instructs the mobile communication terminal whether or not to add the cell to the rejection cell list and perform cell search.
